# EUROPÄISCHE PATENTSCHRIFT

(11) **EP 0 437 697 B1**
(45) Veröffentlichungstag und Bekanntmachung des Hinweises auf die Patenterteilung: **20.03.1996**
(21) Anmeldenummer: 90121836.2
(22) Anmeldetag: 15.11.1990
(51) Int. Cl.: H04L 29/00, G06F 13/00

(54) **Gerätekombination**
Device combination
Combinaison d'appareils

(30) Priorität: 19.01.1990 DE 4001450
(43) Veröffentlichungstag der Anmeldung: 24.07.1991
(73) Patentinhaber: GEBRÜDER MERTEN GMBH & CO. KG, D-51643 Gummersbach (DE); SIEMENS AKTIENGESELLSCHAFT, D-80333 München (DE)
(72) Erfinder: Becker, Erwin, Dipl.-Ing., W-5100 Aachen (DE); Kürten, Roland, Dipl.-Ing., W-5272 Wipperfürth (DE); Gerlach, Horst, Dr. Dr.-Ing., W-8402 Neutraubling (DE); Wimmer, Gerhard, Dipl.-Ing., W-8411 Waldetzenberg (DE)
(74) Vertreter: Selting, Günther, Dipl.-Ing.

(56) Entgegenhaltungen:
- DE-A- 3 726 262
- US-A- 4 695 955
- PATENT ABSTRACTS OF JAPAN vol. 11, no. 235 (M-612)(2682) 31. Juli 1987 &JP-A-62 049 067 (ISUZU MOTORS) 3.März 1987
- IBM TECHNICAL DISCLOSURE BULLETIN September 1989, NEW YORK US Seiten 20 - 21 'identification of five connector states using two pins'

## Beschreibung

Die Erfindung betrifft eine Gerätekombination aus zwei über mindestens eine steckbare Datenleitung korrespondierenden elektrischen Geräten gemäß dem Oberbegriff des Patentanspruchs 1.

Wenn zwei elektrische Geräte über eine Datenleitung miteinander korrespondieren und für das eine dieser Geräte unterschiedliche Typen verfügbar sind, muß in der Regel das andere Gerät eine Erkennungseinrichtung enthalten, die in der Lage ist, zu differenzieren, welcher Gerätetyp des einen Geräts an das andere Gerät angeschlossen ist. Zu diesem Zweck ist es bekannt, das zweite Gerät, das in unterschiedlichen Typen vorhanden ist, mit einer den Gerätetyp bezeichnenden Kennung zu versehen, die von dem ersten Gerät erkannt werden kann. Eine solche Kennung kann beispielsweise aus einem elektrisch, magnetisch oder mechanisch detektierbaren Teil am Stecker des zweiten Gerätes bestehen oder aus einem Impulstelegramm, das nach der gegenseitigen Verbindung der Geräte von dem zweiten Gerät an das erste Gerät übertragen wird. Diese bekannten Arten der Kennungsübermittlung erfordern einen relativ hohen mechanischen oder elektrischen Aufwand, wobei häufig die Erkennungssicherheit nicht hinreichend groß ist. Insbesondere dann, wenn das zweite Gerät in einer Vielzahl unterschiedlicher Typen verfügbar ist und demgemäß in dem ersten Gerät zwischen zahlreichen unterschiedlichen Kennungen unterschieden werden muß, ergibt sich ein erheblicher Aufwand, um in dem ersten Gerät zu erkennen, welcher Typ des zweiten Gerätes angeschlossen ist.

Die DE-A-37 26 262 beschreibt ein Verbindungssystem zwischen einer Stromversorgungseinrichtung und einem daran anschließbaren Elektrowerkzeug. Über Steuerleitungen wird das Elektrowerkzeug von der Stromversorgungseinrichtung angesteuert. Das Elektrowerkzeug bzw. sein Stecker ist in Form mehrerer Widerstände mit analogen Codierungen versehen, die von der Stromversorgungseinrichtung über separate Identifizierungsleitungen abgefragt werden können. Die Codierwiderstände werden von einer konstanten Stromquelle gespeist, so daß an den Codierwiderständen den Widerstandswerten proportionale Codierspannungen anliegen und über die separate Identifizierungsleitungen von der Stromversorgungseinrichtung eingelesen werden. Durch die Codierwiderstände werden Werkzeugparameter wie Frequenz- bzw. Drehzahlbereich des Werkzeugmotors oder eine Last- bzw. Drehmomentbegrenzung als Wert oder Funktion codiert. Zur Identifizierung, Steuerung und zum Austausch von Daten ist eine Vielzahl von Leitungen erforderlich, die einen hohen Aufwand für Kabel und Stecker erfordern und eine Vielzahl von Fehlerquellen insbesondere im Steckerbereich darstellen.

Die JP-A-62-049067 betrifft die Kennzeichnung von Fahrzeugen mit automatischen Getriebe. Am Fahrzeug ist ein Steckergehäuse befestigt, das einen Widerstand enthält. In das Steckergehäuse ist ein Stecker eines externen Gerätes einsteckbar, so daß der Widerstandswert des Widerstandes gemessen und anhand des Widerstandswertes der Fahrzeugtyp bestimmt werden kann. Bis auf die Übertragung des Widerstandswertes sind keine weiteren Singalübertragungen zwischen dem externen Gerät und dem Steckergehäuse vorgesehen.

Der Erfindung liegt die Aufgabe zugrunde, eine Gerätekombination der im Oberbegriff des Patentanspruchs 1 angegebenen Art zu schaffen, bei der die Übermittlung der Kennung des zweiten Geräts an das erste Gerät auf sehr einfache Weise erfolgt.

Die Lösung dieser Aufgabe erfolgt erfindungsgemäß mit den im Patentanspruch 1 angegebenen Merkmalen.

Nach der Erfindung besteht die an dem zweiten Gerät vorgesehene Kennung aus einem gerätespezifischen Gleichspannungspotential, das durch eine Spannungsteilerschaltung gewonnen werden kann. Die unterschiedlichen Typen des zweiten Geräts unterscheiden sich voneinander durch unterschiedliche Gleichspannungspotentiale, d.h. durch unterschiedlich dimensionierte Spannungsteiler. Das über die Identifizierungsleitung von dem zweiten Gerät zum ersten Gerät übertragene Gleichspannungspotential wird im ersten Gerät in einen Digitalwert umgewandelt, der gewissermaßen eine Kennziffer für den Typ des zweiten Gerätes darstellt.

Ein besonderer Vorteil besteht darin, daß eine einfache einadrige Leitung zur Übermittlung einer von zahlreichen Kennungen ausreicht, und daß das die Kennung bildende Gleichspannungspotential ständig zum ersten Gerät übertragen wird. Vorteilhaft ist ferner, daß das zweite Gerät extrem einfach ausgeführt sein kann und für die Kennung lediglich einen einfachen Spannungsteiler erfordert. Die schaltungstechnische Intelligenz ist in dem ersten Gerät, das u.a. einen Analog/Digital-Umsetzer enthält, konzentriert. Dabei ist zu berücksichtigen, daß ein Mikroprozessor häufig die Fähigkeit zur A/D-Umsetzung hat. Wenn ein solcher Mikroprozessor in dem ersten Gerät ohnehin vorhanden ist, ist ein zusätzlicher A/D-Umsetzer nicht erforderlich. Der Mikroprozessor braucht nur so programmiert zu sein, daß er zu bestimmten Zeitpunkten an einem hierfür vorgesehenen Meßeingang das aus dem Gleichspannungspotential bestehende Analogsignal empfängt und in einen entsprechenden Digitalwert umsetzt.

Elektrische Widerstände, die für einen Spannungsteiler zur Bildung des Gleichspannungspotentials verwendet werden können, sind kostengünstig verfügbar. Selbst bei Widerstandstoleranzen in der Größenordnung von 1 - 2 % lassen sich mit unterschiedlich dimensionierten Widerständen bei Verwendung eines 8-Bit-A/D-Umsetzers über eine einzige Identifizierungsleitung 30 unterschiedliche Gleichspannungspotentiale identifizierbar übertragen. Bei 2 Identifizierungsleitungen ergeben sich insgesamt 30 x 30, also 900 Kombinationsmöglichkeiten.

Die Identifizierungsleitung ist nicht als separate Leitung vorzusehen. Vielmehr wird als Identifizierungsleitung eine Datenleitung benutzt , deren Funktion als Datenleitung für die Funktion der Identifizierung unterbrochen wird.

Um in dem ersten Gerät eine sehr genaue Differenzierung der unterschiedlichen möglichen Gleichspannungspotentiale an der Identifizierungsleitung vorzunehmen, sind zweckmäßigerweise beide Geräte durch gemeinsame Spannungsversorgungsleitungen untereinander verbunden. Damit ist sichergestellt, daß die Referenzspannung für den A/D-Umsetzer die gleiche ist, aus der in dem zweiten Gerät das Gleichspannungspotential erzeugt wird, das von dem A/D-Umsetzer ausgewertet wird.

Die Erfindung ist insbesondere in der Hausleittechnik einsetzbar, wie sie beispielsweise in EP 0 344 609 A2 beschrieben ist. Hierbei ist in einem Gebäude ein Datenbusnetz installiert, das an verschiedenen Stellen Anschlußeinrichtungen aufweist und das getrennt von dem üblichen Stromversorgungsnetz vorhanden ist. Uber das Datenbusnetz werden Signale zum Schalten, Steuern, Regeln, Messen und/oder Überwachen übertragen. An den Anschlußstellen ist jeweils eine einen Mikroprozessor enthaltende Universal-Schnittstelle und ein Adapter vorhanden. Die Universal-Schnittstellen sind generell für die verschiedensten Arten von Funktionen geeignet und sie werden durch einen ansteckbaren Adapter zu funktionsspezifischen oder gerätespezifischen Anschlußeinrichtungen. Für die unterschiedlichen Funktionen sind demnach unterschiedliche Adapter vorhanden. Bei einem solchen Hausleitsystem bilden die Universal-Schnittstellen das erste Gerät und die relativ einfach ausgebildeten Adapter bilden das zweite Gerät. Dadurch, daß der Adapter an die Universal-Schnittstelle ein seinen Typ kennzeichnendes Gleichspannungspotential liefert, erkennt die Universal-Schnittstelle, welche Art von Adapter angeschlossen ist bzw. ob derjenige Adaptertyp angeschlossen ist, der der individuellen Programmierung dieser Universal-Schnittstelle entspricht.

Im folgenden wird unter Bezugnahme auf die Figuren ein Ausführungsbeispiel der Erfindung näher erläutert.

Es zeigen:
- Fig. 1: eine schematische Darstellung einer aus zwei Geräten bestehenden Anschlußeinrichtung in einem System der Hausleittechnik, und
- Fig. 2: die elektrische Kopplung der beiden Geräte nach Fig. 1.

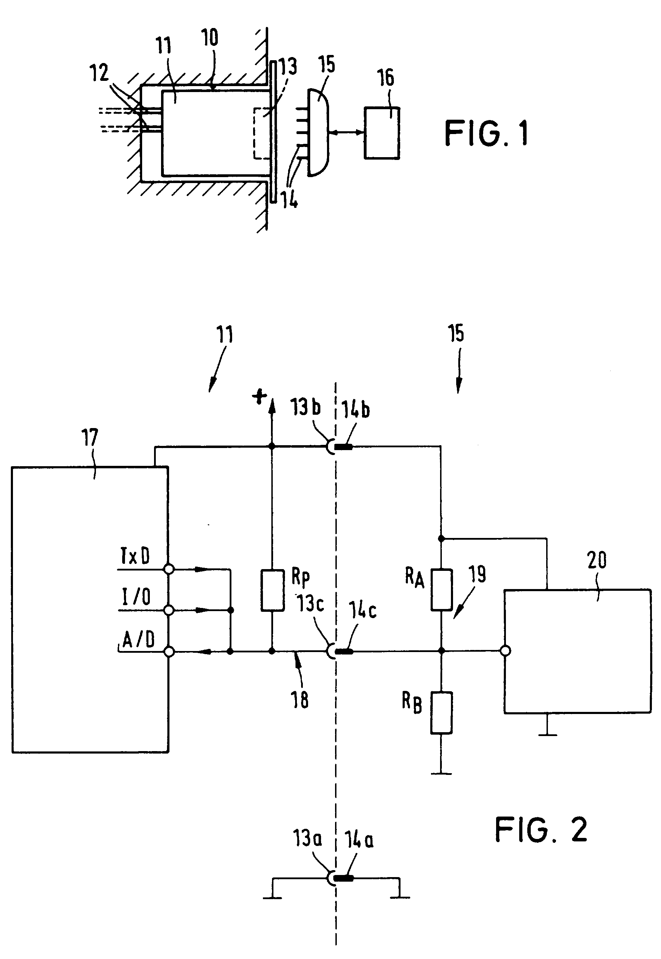

Gemäß Fig. 1 ist in einer elektrischen Installationsdose 10 ein erstes elektrisches Gerät 11 untergebracht, bei dem es sich um eine Universal-Schnittstelle eines Hausleitsystems handelt. Das Hausleitsystem weist ein Datenbusnetz auf und die zu dem Gerät 11 führende zweiadrige Datenbusleitung ist mit 12 bezeichnet.

Das erste Gerät 11 weist an seiner Frontseite eine Kontaktleiste 13 auf, in die die Kontaktstifte 14 des zweiten Gerätes 15 eingesteckt werden können. Das zweite Gerät 15 ist ein Adapter, mit dem das erste Gerät 11 so ergänzt wird, daß beide Geräte zusammen eine Anschlußeinrichtung von spezieller Funktion bilden, also beispielsweise einen Schalter, einen Temperaturfühler, einen Lichtsensor, eine Anzeigevorrichtung u.dgl. Der Adapter 15 kann auch mit einem externen Gerät 16 verbunden sein, beispielsweise einer zu schaltenden Lampe oder einem Gerät, von dem Meßdaten in das Hausleitsystem übermittelt werden sollen.

Gemäß Fig. 2 enthält das erste Gerät 11 einen Mikroprozessor 17 mit einem Analog/Digital-Umsetzer-Eingang A/D, einem allgemeinen Ein-/Ausgangsport I/O und einem Transmit-Port TxD einer seriellen Schnittstelle. Alle diese Ein- und Ausgänge sind mit einer Datenleitung 18 verbunden.

Das erste Gerät 11 erhält seine Versorgungsspannung von 24 V über den Datenbus 12 und wird auf 5 V stabilisiert. Das Massepotential wird über eine Kontaktbuchse 13a der Kontaktleiste 13 und einem Kontaktstift 14a des zweiten Gerätes 15 zum zweiten Gerät übertragen. Das Versorgungsspannungspotential wird über eine Kontaktbuchse 13b der Kontaktleiste 13 und einen Kontaktstift 14b des zweiten Gerätes 15 zum zweiten Gerät übertragen und die Datenleitung 18 ist über eine Kontaktbuchse 13c und einen Kontaktstift 14c zwischen beiden Geräten 11 und 15 verbunden. Im ersten Gerät 11 ist an die Datenleitung 18 ein Vorspannungswiderstand Rₚ angeschlossen, der mit Pluspotential verbunden ist. Dadurch wird erreicht, daß in dem Fall, daß ein zweites Gerät 15 nicht angeschlossen ist, die Datenleitung 18 über den Widerstand Rₚ Pluspotential annimmt. Der Widerstand Rₚ ist hochohmig gegenüber R_{A} und R_{B}.

Im zweiten Gerät 15 ist zwischen Pluspotential und Massepotential ein aus den Widerständen R_{A} und R_{B} bestehender Spannungsteiler 19 geschaltet, dessen Abgriff an die Datenleitung 18, d.h. an den Kontaktstift 14c, angeschlossen ist. Auf diese Weise wird die Datenleitung 18 durch das zweite Gerät 15 auf ein ganz bestimmtes Gleichspannungspotential gelegt, das durch das Verhältnis der Widerstände R_{A} und R_{B} bestimmt wird, wenn im Mikroprozessor 17 die Adaptererkennungsfunktion gewählt ist. Diese Widerstände R_{A} und R_{B} haben je nach Typ des zweiten Geräts 15 unterschiedliche Werte, so daß das an ihnen abgegriffene Gleichspannungspotential, das an die Datenleitung 18 gelegt wird, von dem jeweiligen Gerätetyp abhängt.

Das zweite Gerät 15 enthält ferner eine entsprechend seiner Gerätefunktion ausgebildete Schaltung 20, bei der es sich um einen Logikbaustein, eine Anzeigeeinrichtung, einen Schalter u.dgl. handeln kann. Die Schaltung 20 ist mit der Datenleitung verbunden und sie wird mit der Versorgungsspannung versorgt.

Die Betriebssoftware des Mikroprozessors 17 selektiert denjenigen Port, der für die jeweilige Applikation benötigt wird, wobei jeweils nur ein einziger Port selektiert werden kann. Für die Erkennung des Typs des zweiten Geräts 15 wird die A/D-Funktion gewählt. Der Mikroprozessor 17 setzt den Wert des Gleichspannungspotentials an der Datenleitung 18 in einen Digitalwert um und erkennt auf diese Weise den Typ des angeschlossenen zweiten Geräts 15. Bei einem 8-Bit-A/D-Umsetzer werden zur Erkennung nur 5 Bit ausgewertet, während 3 Bit unberücksichtigt bleiben. Es ergeben sich 32 Stufen. Bei einer Betriebsspannung von 5 V ergibt sich eine Auflösung von 0,156 V pro Stufe. Eine solche Auflösung ist mit Widerständen R_{A},R_{B} mit Toleranz von 2 % realisierbar.

Außer der Datenleitung 18 können natürlich weitere Datenleitungen zwischen den Geräten 11 und 15 existieren. Ferner können auch mehrere Identifizierungsleitungen vorhanden sein, deren Digitalwerte miteinander kombiniert werden.

Wenn der Mikroprozessor 17 im ersten Gerät 11 den Typ des angeschlossenen zweiten Geräts 15 erkannt hat, kann durch Vergleich festgestellt werden, ob dieser Gerätetyp demjenigen entspricht, für das der Mikroprozessor 17 vorprogrammiert ist. Geben die zu vergleichenden Werte keine Koinzidenz, dann kann die Datenübertragung zwischen den Geräten 11,15 durch den Mikroprozessor 17 blockiert werden.

## Patentansprüche

1. Gerätekombination aus zwei über mindestens eine steckbare Übertragungsleitung korrespondierenden elektrischen Geräten (11,15), wobei für das zweite Gerät (15) unterschiedliche Typen verfügbar sind und dieses Gerät (15) eine den Gerätetyp bezeichnende elektrisch detektierbare Kennung aufweist, die von dem ersten Gerät (11) erkannt wird, wobei die Kennung darin besteht, daß eine die Geräte (11,15) verbindende Identifizierungsleitung in dem zweiten Gerät (15) auf ein gerätespezifisches Gleichspannungspotential gelegt ist, und das erste Gerät (11) einen Analog/Digital-Umsetzer enthält, der das Potential der Identifizierungsleitung in einen Digitalwert umwandelt,
**dadurch gekennzeichnet,**
daß die Übertagungsleitung eine Datenleitung (18) ist, und die zugleich als Identifizierungsleitung dient, wobei die Funktion als Datenleitung für die Funktion der Identifizierung unterbrochen wird.

2. Gerätekombination nach Anspruch 1, dadurch gekennzeichnet, daß beide Geräte (11,15) durch gemeinsame Spannungsversorgungsleitungen untereinander verbunden sind.

3. Gerätekombination nach Anspruch 1 oder 2, dadurch gekennzeichnet, daß in dem ersten Gerät (11) an die Identifizierungsleitung ein mit definiertem Potential verbundener Widerstand (Rₚ) angeschlossen ist, der bei nicht-angeschlossenem zweiten Gerät (15) das definierte Potential an die Identifizierungsleitung legt.

4. Gerätekombination nach einem der Ansprüche 1-3, dadurch gekennzeichnet, daß das erste Gerät (11) dann, wenn der Digitalwert nicht mit einem vorgespeicherten Kennwert übereinstimmt, die Datenübertragung zwischen den Geräten (11,15) blockiert.

5. Gerätekombination nach einem der Ansprüche 1-4, dadurch gekennzeichnet, daß das erste Gerät (11) eine einen programmierbaren Mikroprozessor (17) enthaltende Universal-Schnittstelle eines in einem Gebäude verlegten Datenbusnetzes und das zweite Gerät (15) ein Adapter ist, der die Universal-Schnittstelle zu einer Eingabe- und/oder Ausgabeeinrichtung für das Datennetz ergänzt.

## Claims

1. A device combination consisting of at least two electrical devices (11,15) corresponding via at least one pluggable transmission line, wherein different types of the second device (15) are available and said device (15) comprises an electrically detectable identification designating the device type and being recognized by the first device (11), the identification consisting in that to an identification line in the second device (15) connecting the devices (11,15), a device-specific d.c. potential is applied, and the first device (11) comprising an analog-digital converter converting the potential of the identification line into a digital value,
**characterized in**
that the transmission line is a data line (18) which also serves as identification line, the function as data line being interrupted for the identification function.

2. The device combination according to claim 1, characterized in that both devices (11,15) are interconnected by common voltage supply lines.

3. The device combination according to claim 1 or 2, characterized in that in the first device (11), a resistor (R_{P}) connected with a defined potential is connected to the identification line, said resistor applying the defined potential to the identification line when the second device (15) is not connected.

4. The device combination according to one of claims 1 - 3, characterized in that the first device (11) blocks the data transmission between the devices (11,15) when the digital value does not correspond with a prestored identification value.

5. The device combination according to one of claims 1 - 4, characterized in that the first device (11) is a universal interface including a programmable microprocessor (17) and forming part of a data bus net installed in a building, and the second device (15) is an adapter completing the universal interface so as to form an input and/or output means for the data net.

## Revendications

1. Combinaison d'appareils composée de deux appareils électriques (11, 15) correspondant par l'intermédiaire d'au moins une ligne de transmission enfichable, le second appareil (15) étant disponible dans différents types, et cet appareil (15) comportant une identification détectable électriquement et désignant le type de l'appareil et qui est reconnue par le premier appareil (11), l'identification résidant en ce qu'une ligne d'identification reliant les appareils (11, 15) reçoit, dans le second appareil (15), un potentiel de tension continue spécifique à l'appareil, et le premier appareil (11) comprenant un convertisseur analogique-numérique qui convertit le potentiel de la ligne d'identification en une valeur numérique, caractérisée en ce que la ligne de transmission est une ligne de données (18), et en ce qu'elle sert aussi comme ligne d'identification, de sorte que la fonction comme ligne de donnés est interrompue pendant la fonction d'identification.

2. Combinaison d'appareils selon la revendication 1, caractérisée en ce que les deux appareils (11, 15) sont interconnectés par l'intermédiaire de lignes communes d'alimentation en tension.

3. Combinaison d'appareils selon la revendication 1 ou 2, caractérisée en ce que, dans le premier appareil (11), une résistance (Rₚ) reliée à un potentiel défini est connectée à la ligne d'identification et, lorsque le second appareil (15) n'est pas connecté, elle applique le potentiel défini à la ligne d'identification.

4. Combinaison d'appareils selon l'une des revendications 1 à 3, caractérisée en ce que le premier appareil (11) bloque la transmission de données entre les appareils (11, 15) lorsque la valeur numérique ne concorde pas avec une valeur caractéristique préalablement mémorisée.

5. Combinaison d'appareils selon l'une des revendications 1 à 4, caractérisée en ce que le premier appareil (11) est une interface universelle comprenant un microprocesseur programmable (17) et faisant partie d'un réseau de bus de données installé dans un bâtiment, et le second appareil (15) est un adaptateur qui complète l'interface universelle pour former un dispositif d'entrée et/ou de sortie pour le réseau de données.
